## Europäisches Patentamt

## European Patent Office

## Office européen des brevets

(19)

(11) Veröffentlichungsnummer: **0 077 984**
**B1**

(12) # EUROPÄISCHE PATENTSCHRIFT

(45) Veröffentlichungstag der Patentschrift:
**11.09.85**

(21) Anmeldenummer: **82109538.7**

(22) Anmeldetag: **15.10.82**

(51) Int. Cl.⁴: **F 16 K 31/12, F 15 B 11/14**

(54) **Stellantrieb.**

(30) Priorität: **27.10.81 DE 3142583**

(43) Veröffentlichungstag der Anmeldung:
**04.05.83 Patentblatt 83/18**

(45) Bekanntmachung des Hinweises auf die Patenterteilung:
**11.09.85 Patentblatt 85/37**

(84) Benannte Vertragsstaaten:
**CH FR GB IT LI NL**

(56) Entgegenhaltungen:
**DE - B - 1 260 255**
**US - A - 3 219 902**

(73) Patentinhaber: **Milde, Klemens, Wittenbergerstrasse 78,
D-4230 Wesel 13 (DE)**

(72) Erfinder: **Milde, Klemens, Wittenbergerstrasse 78,
D-4230 Wesel 13 (DE)**

(74) Vertreter: **Sroka, Peter-Christian, Dipl.-Ing. et al,
Dominikanerstrasse 37 Postfach 111038,
D-4000 Düsseldorf 11 (DE)**

1        0 077 984        2

**Beschreibung**

Die Erfindung betrifft einen Stellantrieb mit Rotationsmotor und mit einer Wegschaltung zum Abschalten des Rotationsmotors in Endstellung und einer Drehmomentschaltung zum Abschalten des Rotationsmotors bei Überlast.

Stellantriebe, die beispielsweise zur Fernbetätigung von Absperrorganen in Rohrleitungen od. dgl. dienen, werden bisher in der Regel von Elektro-Rotationsmotoren angetrieben, die meistens direkt an das Stellantriebgehäuse angeflanscht sind (z. B. US-A-3 219 902). Dem Stellantrieb bzw. dem Elektro-Rotationsmotor ist eine Wegschaltung und eine Drehmomentschaltung zugeordnet. Die Wegschaltung kann beispielsweise nach dem Prinzip eines Zählwerkes aufgebaut sein und dient zum Abschalten des Elektro-Rotationsmotors in den Endlagen. Die Drehmomentabschaltung kann beispielsweise als in beiden Richtungen wirksame Doppeldrehmomentschaltung aufgebaut sein und entweder in beiden Endlagen als Sicherheitsschalter dienen oder als Überlastschalter für den Fall, daß beispielsweise in das Absperrorgan ein Fremdkörper eingedrungen ist, so daß die Wegschaltung bzw. die wegabhängige Abschaltung nicht wirksam werden kann. Für diesen Fall wird der Schutz gegen Überlast von der Drehmomentschaltung bzw. drehmomentabhängigen Abschaltung übernommen. Sowohl die Wegschaltung als auch die Drehmomentschaltung enthält bei den bekannten Stellantrieben elektrische Wegschalter bzw. Drehmomentschalter für die elektrische Beeinflussung des Elektro-Rotationsmotors.

Stellantriebe werden häufig im explosionsgefährdeten Betrieb eingesetzt, so daß umfangreiche Explosionsschutzvorkehrungen getroffen werden müssen.

Um diesbezüglich eine Vereinfachung zu schaffen ist es bereits bekannt, als Stellmotor einen mit Drucköl betätigten Kolbenmotor oder einen Membranmotor für Druckluftanschluß zu verwenden. Derartige Kolbenmotoren bzw. Membranmotoren haben jedoch verglichen mit Elektro-Rotationsmotoren wesentliche Funktionsnachteile, so daß die Mehrzahl der im Einsatz befindlichen Stellantriebe mit elektrischen Antriebs- und Regel- bzw. Steuereinrichtungen ausgerüstet sind.

Der Erfindung liegt die Aufgabe zugrunde, einen Stellantrieb mit Rotationsmotor und Weg- und Drehmomentschaltung so zu gestalten, daß einerseits auf die bei elektrischen Einrichtungen häufig erforderlichen Schutzvorkehrungen verzichtet werden kann, während andererseits die Funktionsvorteile des Elektrobetriebes erhalten bleiben sollen. Dabei geht es insbesondere auch darum, eine Weg- und Drehmomentschaltung mit den Funktionseigenschaften zu schaffen, wie sie bisher dem Elektrobetrieb vorbehalten gewesen ist.

Diese Aufgabe wird durch den im Anspruch 1 beschriebenen Stellantrieb gelöst.

Der wesentliche Vorteil des erfindungsgemäßen Stellantriebes besteht darin, daß trotz Verwendung eines Druckluftmotors mit Druckluftantrieb und Druckluftsteuerung bzw. -regelung sämtliche Funktionsvorteile erhalten bleiben, die bisher mit einem Elektromotor und einer elektrischen Steuerung bzw. Regelung erreicht werden konnten, wobei jedoch infolge der Verwendung von Druckluft als Antriebs- und Steuermedium insbesondere beim explosionsgefährdeten Betrieb die bisher erforderlichen Explosionsschutzvorkehrungen entfallen können.

Weitere Merkmale der Erfindung sind in den Unteransprüchen behandelt.

Die Erfindung wird im folgenden an Hand der Zeichnung näher beschrieben. Es zeigt

Fig. 1 eine Explosionsansicht des erfindungsgemäßen Stellantriebs mit Druckluft-Rotationsmotor und pneumatisch wirksamer Weg- und Drehmomentschaltung, und

Fig. 2 ein Schaltbild der pneumatischen Steuer- und Regeleinrichtung.

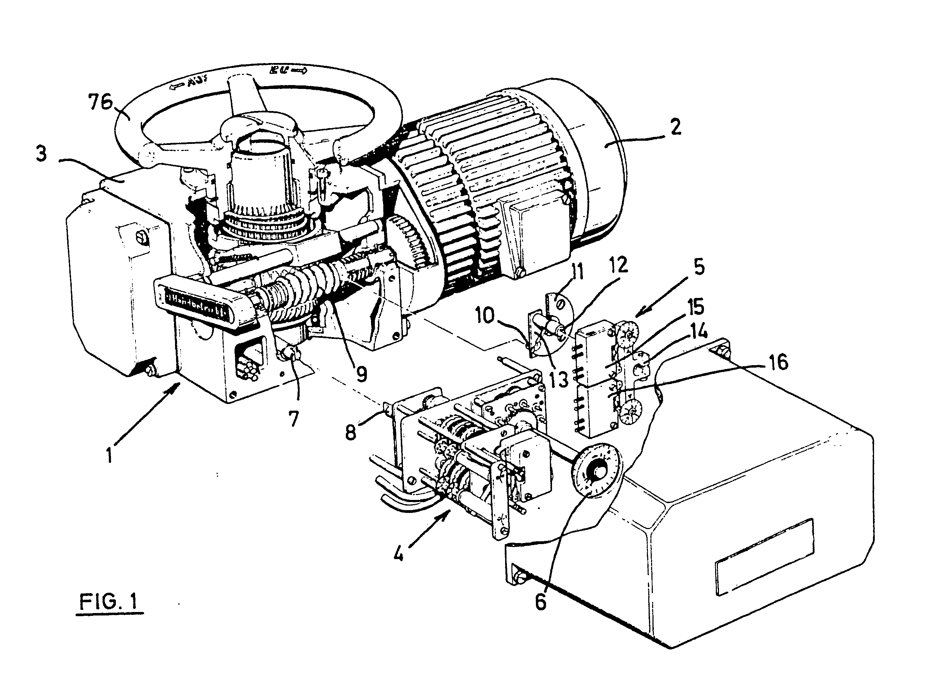

Fig. 1 zeigt einen Stellantrieb 1 mit angeflanschtem Druckluft-Rotationsmotor 2. Der Stellantrieb dient beispielsweise zur Fernbetätigung von Absperrorganen in Rohrleitungen od. dgl. Der Stellantrieb umfaßt ein Gehäuse 3, in dem die nicht zur Erfindung gehörenden und daher auch im einzelnen nicht näher bezeichneten Getriebeelemente untergebracht sind. Dem Stellantrieb ist eine Wegschaltung 4 und eine Drehmomentschaltung 5 zugeordnet. Der Wegschaltung 4 ist nach dem Prinzip eines Zählwerkes aufgebaut und dient zum Abschalten des Druckluft-Rotationsmotors 2 in den Endlagen. Der Wegschaltung 4 ist eine Anzeigescheibe 6 zur visuellen Anzeige der Stellantriebstellung zugeordnet.

Die Drehmomentschaltung 5 ist als in beiden Richtungen wirksame Doppeldrehmomentschaltung aufgebaut und kann entweder in beiden Endlagen als Sicherheitsschalter dienen oder als Überlastschalter für den Fall, daß beispielsweise in das Absperrorgan ein Fremdkörper eingedrungen ist, so daß die Wegschaltung bzw. wegabhängige Abschaltung nicht wirksam werden kann. Der Schutz gegen Überlast wird dann von der Drehmomentschaltung 5 bzw. drehmomentabhängigen Abschaltung übernommen.

Der Antrieb der Wegschaltung erfolgt über einen wegabhängig angetriebenen, dem Stellantrieb zugeordneten Zapfen 7, der mit einem Antriebszapfen 8 der Wegschaltung 4 gekuppelt ist.

Die drehmomentabhängige Abschaltung beruht auf dem Prinzip der sogenannten »Wanderschnecke«, d. h. der Drehmomentschaltung 5 ist im Bereich des Stellantriebes ein Schneckengetriebe zugeordnet, dessen Schnecke 9 mittels Federkraft im wesentlichen mittig zu einem Schneckenrad gehalten wird. Die Drehmomentschaltung 5 enthält eine Lagerscheibe 11, die in nicht dargestellter Weise an der Wandung des Gehäuses 3 befestigt ist. In der Lagerscheibe 11

2

ist eine Welle 12 drehbar gelagert, an der ein die Form eines Hebelarmes aufweisender Drehmomenttaster 13 starr befestigt ist, der an seinem freien Ende einen Zapfen 10 trägt, der in die Umfangsnut der Schnecke 9 eingreift. Bei Auftreten eines Lastenmomentes, das größer als das durch die Vorspannung der die Schnecke mittig zum Schneckenrad haltenden Federn eingestellte Moment ist, führt die Schnecke bzw. Schnekkenwelle eine Wanderbewegung in axialer Richtung aus, wodurch der Drehmomenttaster in der einen oder anderen Richtung verschwenkt wird. Diese Schwenkbewegung des Drehmomenttasters 13 überträgt sich auf die Welle 12. Auf der Welle 12 ist ein zweiarmiger Kipphebel 14 festgeklemmt, der an seinen beiden Enden Betätigungselemente für Drehmomentschalter 15 und 16 trägt. In Abhängigkeit von dem auftretenden Lastenmoment wird somit der Kipphebel 14 in der einen oder anderen Richtung verschwenkt, wodurch beim Überschreiten bestimmter Schwellwerte jeweils einer der beiden Drehmomentschalter 15 bzw. 16 betätigt wird.

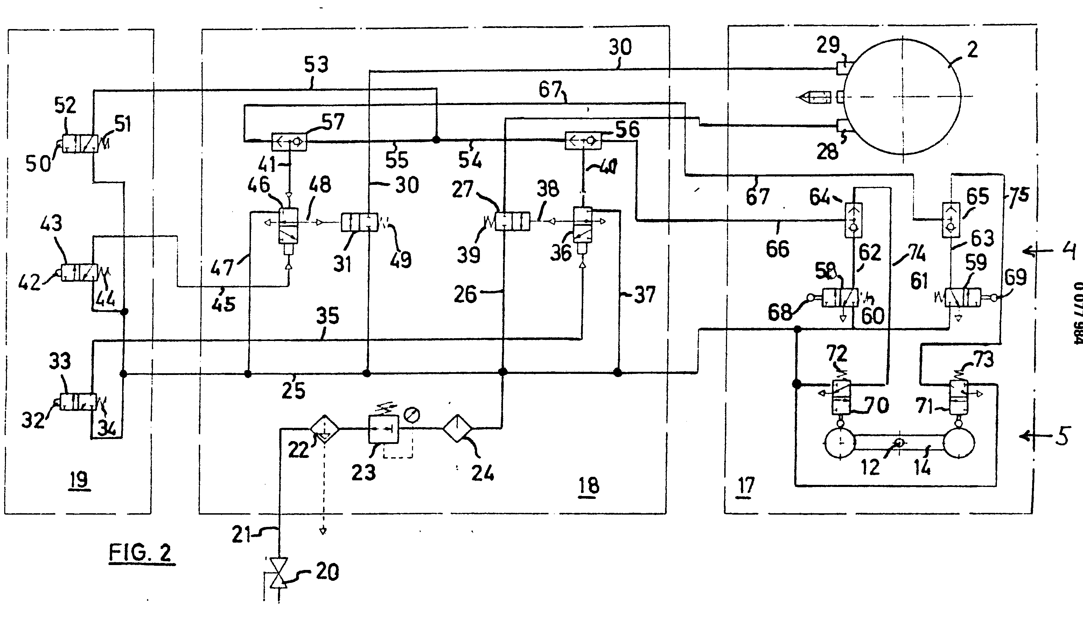

Die Fig. 2 zeigt in vereinfachter Darstellung den Aufbau des pneumatischen Steuer- und Regelkreises, und zwar aufgeteilt auf den eigentlichen Motorantrieb 17, einen Steuerschrank 18 und ein Bedienungspult 19. In den Steuerschrank 18 mündet eine ein Absperrelement 20 aufweisende Druckluftleitung 21, die über ein Entwässerungsventil 22, eine Druckanzeige 23 und eine Ölereinrichtung 24 an eine Hauptverteilerleitung 25 angeschlossen ist. An die Hauptverteilerleitung 25 schließt eine erste Versorgungsleitung 26 an, die mit einem gemäß Fig. 2 sich in Sperrstellung befindenden Unterbrecherventil 27 versehen ist. Die Versorgungsleitung 26 führt hinter dem Unterbrecherventil 27 zu einem Anschlußstutzen 28 für den »Rechtslauf« des Druckluft-Rotationsmotors 2. Ein für den »Linkslauf« vorgesehener zweiter Anschlußstutzen 29 des Druckluft-Rotationsmotors 2 ist über eine Versorgungsleitung 30, in die ebenfalls ein sich gemäß Fig. 2 in Sperrstellung befindliches Unterbrechungsventil 31 eingeschaltet ist, an die Hauptverteilerleitung 25 angeschlossen.

Für den Rechtslauf des Druckluft-Rotationsmotors 2 ist ein Taster 32 zur Betätigung eines 3/2-Wegeventils 33 vorgesehen, das an die Hauptverteilungsleitung 25 angeschlossen ist und sich, belastet durch eine Rückstellfeder 34, normalerweise in der in Fig. 2 dargestellten Sperrstellung befindet. An das 3/2-Wegeventil 33 ist eine Steuerleitung 35 angeschlossen, die zu einem dem Unterbrechungsventil 27 zugeordneten Steuerelement in Form eines 3/2-Wegeventils 36 führt. Dieses 3/2-Wegeventil 36 ist an eine ebenfalls an die Hauptverteilerleitung 25 angeschlossene Steuerleitung 37 angeschlossen, die in der Durchlaßstellung des 3/2-Wegeventils 36 mit einer Leitung 38 in Verbindung steht, um das Unterbrecherventil 27 gegen die Kraft einer Rückstellfeder 29 aus der Sperrstellung in die Durchlaßstellung verstellen zu können, wodurch der Anschlußstutzen 28 des Druckluft-Rotationsmotors 2 mit Druckluft versorgt werden kann.

Für den Linkslauf des Druckluft-Rotationsmotors 2, d. h. für die Versorgung des Anschlußstutzens 29 mit Druckluft, ist ein äquivalenter Steuerbzw. Regelkreis vorgesehen, bestehend aus einem Taster 42 für ein durch eine Rückstellfeder beaufschlagtes 3/2-Wegeventil 43, das einerseits an die Hauptverteilerleitung 25 und andererseits an eine Steuerleitung 45 angeschlossen ist, die zu einem 3/2-Wegeventil 46 führt, welches dazu dient, eine an die Hauptverteilerleitung 25 angeschlossene Steuerleitung 47 entweder mit einer Leitung 48 zu verbinden oder davon zu trennen, die zu dem unter dem Einfluß einer Rückstellfeder 49 stehenden Unterbrecherventil 31 führt.

Im Bereich des Bedienungspultes 19 ist außerdem ein Stopptaster 50 für die Betätigung eines von einer Rückstellfeder 51 belasteten 3/2-Wegeventils 52 vorgesehen, das einerseits an die Hauptverteilerleitung 25 und andererseits an eine Steuerleitung 53 angeschlossen ist, die über zwei Zweigleitungen 54 und 55 zu zwei Wechselventilen 56 und 57 führt, von denen das eine dem 3/2-Wegeventil 36 und damit dem Unterbrecherventil 27 für den Rechtslauf und das andere dem 3/2-Wegeventil 46 und damit dem Unterbrecherventil 31 für den Linkslauf zugeordnet ist. An den Mittenanschluß der beiden Wechselventile 56 bzw. 57 sind in den 3/2-Wegeventilen 36 bzw. 46 führende Steuerleitungen 40 bzw. 41 angeschlossen.

Um den Druckluft-Rotationsmotor 2 beispielsweise zum Rechtslauf anzutreiben, wird bei geöffnetem Absperrelement 20 der Rechtslauf-Taster 32 niedergedrückt, wodurch das 3/2-Wegeventil 33 entgegen der Kraft der Rückstellfeder 34 in seine die Hautverteilerleitung 25 mit der Steuerleitung 35 verbindende Durchflußstellung verstellt wird, was zur Folge hat, daß auf das 3/2-Wegeventil 36 Druckluft einwirkt, wodurch dieses 3/2-Wegeventil 36 aus der in Fig. 2 dargestellten Sperrstellung in die die Steuerleitung 37 mit der Leitung 38 verbindende Durchflußstellung verstellt wird. Dadurch wirkt Druckluft auf das Unterbrecherventil 37 ein, das entgegen der Kraft der Rückstellfeder 39 aus der in Fig. 2 dargestellten Sperrstellung in die Durchflußstellung verstellt, so daß nunmehr über die Versorgungsleitung 26 der Anschlußstutzen 28 an die Hauptverteilerleitung 25 angeschlossen ist.

Der Druckluft-Rotationsmotor läuft nunmehr im Rechtslauf um und treibt in entsprechender Weise den Stellantrieb 1 an.

Die Verbindung zwischen der Hauptverteilerleitung 25 und dem Anschlußstutzen 28 bleibt selbst dann bestehen, wenn der Rechtslauf-Taster 32 wieder losgelassen und das 3/2-Wegeventil unter dem Einfluß der Rückstellfeder 34 in seine ursprüngliche Sperrstellung zurückverstellt wird, da das dem Unterbrecherventil 27 zugeordnete 3/2-Wegeventil 36 in seiner Durchflußstellung verbleibt, so daß das Unterbrecherventil 27 weiterhin durch die durch die Leitungen 37, 38 zugeführte Druckluft in seiner Durchflußstellung gehalten wird.

Um den Rechtslauf des Druckluft-Rotationsmotors 2 beispielsweise von Hand zu beendigen, wird der Stopptaster 50 betätigt, wodurch das 3/2-Wegeventil 52 entgegen der Kraft der Rückstellfeder 51 in die die Hauptverteilerleitung 25 mit der Steuerleitung 53 verbindende Durchflußstellung verstellt wird. Dieses hat zur Folge, daß durch die Zweigleitung 54 und das Wechselventil 56 und die Steuerleitung 40 Druckluft auf das 3/2-Wegeventil zur Einwirkung kommt, wodurch dieses 3/2-Wegeventil wieder in seine ursprüngliche Sperrstellung zurückgeschoben wird. Dadurch wird die Verbindung zwischen den beiden Leitungen 37 und 38 und damit die Druckluftbeaufschlagung des Unterbrecherventils 27 unterbrochen, so daß dieses Unterbrecherventil 27 von der Rückstellfeder 39 wieder in die Sperrstellung zurückgestellt wird.

Die einzelnen 3/2-Wegeventile weisen im übrigen in bekannter Weise neben den Druck- und Arbeitsanschlüssen Abluftöffnung auf, um die jeweils notwendigen Leitungsabschnitte bei entsprechender Stellung der 3/2-Wegeventile zu entlüften.

Der Antrieb des Druckluft-Rotationsmotors 2 im Linkslauf folgt in entsprechender Weise durch Betätigung des Linkslauf-Tasters 42.

In der Regel wird der Druckluft-Rotationsmotor 2 jedoch nicht von Hand mittels des Stopptasters 50 abgeschaltet, sondern wegeabhängig mittels der Wegschaltung 4, die gemäß Fig. 2 zwei Wegschalter 58, 59 mit zugeordneten 3/2-Wegeventilen umfaßt. Diese beiden Wegschalter 58 und 59 werden normalerweise mittels Rückstellfedern 60 und 61 in der in Fig. 2 dargestellten Sperrstellung gehalten, in der sie die Verbindung zwischen der Hauptverteilerleitung 25 und Steuerleitungen 62, 63 sperren, welche zu Wechselventilen 64 bzw. 65 führen. Der Mittenanschluß jedes der beiden Wechselventile 64 und 65 ist über Steuerleitungen 66 bzw. 67 jeweils an das Wechselventil 56 für den Rechtslauf bzw. das Wechselventil 57 für den Linkslauf angeschlossen.

Wenn beispielsweise der Druckluft-Rotationsmotor zum Schließen des von dem Stellantrieb 1 betätigten Absperrorgans im Rechtslauf umläuft, und wenn dieses Absperrorgan seine Schließstellung erreicht hat, wird, abgeleitet von der Drehbewegung der Zapfen 7 und 8, ein Stellglied 68 in eine den Wegschalter 58 entgegen der Kraft der Rückstellfeder 60 verstellende Position gebracht, derart, daß die Verbindung zwischen der Hauptverteilerleitung 25 und der Steuerleitung 62 hergestellt wird. Dadurch wird der Schließkörper des Wechselventils 64 derart verstellt, daß eine Verbindung zwischen den beiden Steuerleitungen 62 und 66 hergestellt ist, wodurch der Schließkörper des Wechselventils 56 in eine solche Stellung bewegt wird, daß das 3/2-Wegeventil 36 durch die Steuerleitung 40 mit Druck beaufschlagt und aus seiner Durchlaßstellung in die Sperrstellung verstellt wird, in der die Verbindung zwischen der Steuerleitung 37 und der Leitung 38 unterbrochen und die Leitung 38 gleichzeitig entlüftet ist. Dadurch hört die Druckluftbeaufschlagung des Unterbrecherventils 27 auf, so daß dieses von der Rückstellfeder 39 wieder in die in Fig. 2 dargestellte Sperrstellung verstellt wird.

Wenn der Druckluft-Rotationsmotor 2 durch Betätigung des Linkslauf-Tasters 42 in einer das Öffnen des Absperrorganes bewirkenden Weise angetrieben wird, erfolgt das Wiederabschalten des Druckluft-Rotationsmotors 2 nach Erreichen der Öffnungsstellung des Absperrorganes äquivalent durch Betätigung des Wegschalters 59 mittels des Stellgliedes 69, und zwar dann über die Steuerleitung 63, das Wechselventil 65, die Steuerleitung 67 und das Wechselventil 57 mit angeschlossener Steuerleitung 41.

Um neben der Wegabschaltung einen Schutz gegen Überlast zu erhalten, ist die Drehmomentschaltung 5 vorgesehen, die in Fig. 2 durch den auf der Welle 12 festgeklemmten Kipphebel 14 und die beiden Drehmomentschalter 70 und 71 repräsentiert ist, welche die Form von 3/2-Wegeventilen haben. Jeder Drehmomentschalter 70 und 71 wird normalerweise mittels einer zugeordneten Rückstellfeder 72 bzw. 73 in seiner Sperrstellung gehalten. Wenn bei Auftreten einer Überlast der Kipphebel 14 in der einen oder anderen Richtung verschwenkt wird, wird entweder der eine oder der andere Drehmomentschalter 70 bzw. 71 betätigt, wodurch das jeweilige 3/2-Wegeventil aus seiner Sperrstellung in eine Durchlaßstellung verstellt wird. In dieser Durchlaßstellung wird von dem jeweiligen 3/2-Wegeventil eine Verbindung zwischen der Hauptverteilerleitung 25 einerseits und Steuerleitungen 74 bzw. 76 hergestellt, die zu den den Wegschaltern 68 und 69 nachgeschalteten Wechselventilen 64 bzw. 65 führen.

Wenn beispielsweise bei Rechtslauf des Druckluft-Rotationsmotors eine Überlast auftritt und dadurch von dem Kipphebel 14 der Drehmomentschalter 70 in die Durchflußstellung seines 3/2-Wegeventils verstellt wird, strömt Druckluft durch die Steuerleitung 74, das Wechselventil 64 und die Steuerleitung 66, wodurch über das Wechselventil 56 und die Steuerleitung 40 Druckluft auf das 3/2-Wegeventil 36 einwirkt, wodurch dieses in die in Fig. 2 dargestellte Sperrstellung verstellt wird, was in der oben bereits beschriebenen Weise zur Folge hat, daß das Unterbrecherventil 27 wieder geschlossen wird.

Die Erfindung ist an Hand einer Ausführungsform mit jeweils zwei Drehmomentschaltern und zwei Wegschaltern und einer mechanischen Stellungsanzeige 6 dargestellt und beschrieben worden. Es sind jedoch auch andere Variationsmöglichkeiten möglich, beispielsweise das Anbringen von vier Wegschaltern mit zwei Drehmomentschaltern usw. Die Wegschalter und Drehmomentschalter können stufenlos von Minimum bis Maximum eingestellt werden, wobei auch die Drehmomentschalter einstellbar und ablesbar gestaltet sein können. Der Antrieb kann bei Druckluftausfall auch von Hand mittels des Handrades 76 erfolgen. Durch Auswechseln der Motorvorgelegeräder können auch die verschiedensten Geschwindigkeiten (Drehzahlen) gefahren werden. Durch die Konstruktion nach dem Baukastenprinzip kann der erfindungsgemäße Stellantrieb für die verschiedensten Medien und Absperrorgane eingesetzt werden, beispielsweise Schieber, Ventile, Drehklappen, Kugelhähne usw.

**Patentansprüche**

1. Stellantrieb (1) mit Rotationsmotor (2) und mit einer Wegschaltung (4) zum Abschalten des Rotationsmotors in Endstellungen und einer Drehmomentschaltung (5) zum Abschalten des Rotationsmotors (2) bei Überlast, dadurch gekennzeichnet, daß der Rotationsmotor (2) ein Druckluft-Rotationsmotor (2) ist, daß die Wegschaltung (4) für jede Endstellung einen Wegschalter (58, 59) mit zugeordnetem Mehrwegeventil, vorzugsweise 3/2-Wegeventil, enthält, das bei Erreichen der zugeordneten Endstellung eine Verbindung zwischen einer Hauptverteilerleitung (25) und einem Eingang eines nachgeschalteten Wechselventils (64 bzw. 65) herzustellen vermag, derart, daß durch den Mittenanschluß dieses Wechselventils Steuerluft zur Verstellung eines Unterbrecherventils (27 bzw. 31) strömt, das in der zum Druckluft-Rotationsmotor (2) führenden Versorgungsleitung (26 bzw. 30) liegt, und daß die Drehmomentschaltung (5) für jede Drehrichtung einen Drehmomentschalter in Form eines Mehrwegeventils, vorzugsweise 3/2-Wegeventil (70 bzw. 71), aufweist, das bei Erreichen einer vorgegebenen Überlast eine Verbindung zwischen der Hauptverteilerleitung (25) und dem zweiten Eingang des drehrichtungsbezogen zugeordneten Wechselventils (64 bzw. 65) zur Verstellung des zugeordneten Unterbrecherventils (27 bzw. 31) in die Sperrstellung herzustellen vermag.

2. Stellantrieb nach Anspruch 1, dadurch gekennzeichnet, daß der Mittenanschluß jedes der beiden Wechselventile (64 bzw. 65) mittels einer Steuerleitung (66 bzw. 67) an ein weiteres Wechselventil (56 bzw. 57) angeschlossen ist, derart, daß durch den Mittenanschluß dieses nachgeschalteten Wechselventils (56 bzw. 57) Steuerluft zur Verstellung des jeweiligen Unterbrecherventils (27 bzw. 31) zu strömen vermag.

3. Stellantrieb nach Anspruch 2, gekennzeichnet durch einen von Hand betätigbaren Stopptaster (50) zur Betätigung eines 3/2-Wegeventils (52), welches zwischen der Hauptverteilerleitung (25) und zu den beiden Wechselventilen (56, 57) führenden Steuer- bzw. Zweigleitungen (53, 54, 55) liegt.

4. Stellantrieb nach einem der Ansprüche 1 bis 3, dadurch gekennzeichnet, daß den Unterbrecherventilen (27, 31) Steuerelemente in Form von Mehrwegeventilen, vorzugsweise 3/2-Wegeventilen (36, 46), zur Regelung der die Unterbrecherventile (27 bzw. 30) verstellenden Steuerluft zugeordnet sind, und daß diese 3/2-Wegeventile (36, 46) einerseits durch insbesondere von Hand betätigbare Taster (32 bzw. 42) für den Rechtslauf oder den Linkslauf des Druckluft-Rotationsmotors (2) in eine Steuerluft-Durchlaßstellung zum Zuführen von die Unterbrecherventile (27 bzw. 31) öffnende Steuerluft und andererseits durch die von den Wechselventilen (64 bzw. 65 bzw. 56 bzw. 57) kommende Steuerluft in eine Sperrstellung verstellbar sind, die der Sperrstellung der zugeordneten Unterbrecherventile (27 bzw. 31) entspricht.

**Claims**

1. Positioning actuator (1) including a rotational motor (2) and, further, a length-of-path gearing (4) for switching off said rotational motor in end positions, as well as a torque gearing (5) for switching off said rotational motor (2) upon overload, characterized in that said rotational motor ist a pneumatic rotational motor (2), in that the length-of-path gearing (4) comprises, for each of the end positions, a length-of-path switch (58, 59) having associated therewith a multi-way valve, preferably a 3/2-way valve which, upon the attainment of the respective end position, is adapted to establish a connection between a main distribution line (25) and one input of a subsequent two-way valve (64 or 65) in such a way that compressed air flows through the central connection of said valve for shifting an interrupter valve (27 or 31) which is arranged in the supply line (26 or 30) leading to the pneumatic rotational motor (2), and in that the torque gearing (5) comprises, for each direction of rotation, a torque switch in the form of a multi-way valve, preferably a 3/2-way valve (70 or 71) which, upon the attainment of a predetermined overload, is adapted to establish a connection between the main distribution line (25) and the second input of the two-way valve (64 or 65) associated therewith in the respective direction of rotation, for shifting the associated interrupter valve (27 or 31) into the closed position.

2. Positioning actuator as claimed in claim 1, characterized in that the central connection of each of the two two-way valves (64 or 65) is connected to a further two-way valve (56 or 57) through a control line (66 or 67) in such a way that control air is allowed to flow through the central connection of said subsequent two-way valve (56 or 57) for shifting the corresponding interrupter valve (27 or 31).

3. Positioning actuator as claimed in claim 2, characterized by a manually operated stop key (50) for actuating a 3/2-way valve (52) which is arranged between the main distribution line (25) and the control or branch lines (53, 54, 55) leading to the two two-way valves (56, 57).

4. Positioning actuator as claimed in any of claims 1 to 3, characterized in that control elements in the form of multi-way valves, preferably 3/2-way valves (36, 46), are associated with the interrupter valves (27, 31), for regulating the compressed air shifting said interrupter valves, and that the 3/2-way valves (36, 46), on one hand, are adapted to be shifted by means of preferably manually operated keys (32 or 42) for the clockwise or anti-clockwise rotation of the pneumatic rotational motor (2), into a position in which compressed air can flow for opening said interrupter valves (27, 31) and, on the other hand, are adapted to be shifted by the compressed air escaping from the two-way valves (64 or 65, 56 or 57), into a closed position corresponding to the closed position of the interrupter valves (27, 31) associated therewith.

## Revendications

1. Actionneur (1) à moteur rotatif (2) comportant un circuit de course (4) pour l'arrêt du moteur rotatif dans des positions extrêmes et un circuit de couple (5) pour l'arrêt du moteur rotatif (2) en cas de surcharge, caractérisé par le fait que le moteur rotatif (2) est un moteur pneumatique (2), que le circuit de course (4) comporte, pour chaque position extrême, un interrupteur de course (58, 59) auquel est adjoint un distributeur, de préférence un distributeur 3/2, qui, lorsque la position extrême correspondante est atteinte, peut établir une liaison entre une conduite de distribution principale (25) et une entrée d'un sélecteur de circuit (64 ou 65) de façon telle que de l'air de pilotage passe par l'orifice central de ce sélecteur de circuit pour manoeuvrer un distributeur d'isolement (27 ou 31) qui est monté sur la conduite d'alimentation (26 ou 30) allant au moteur rotatif pneumatique (2), et que le circuit de couple (5) comporte, pour chaque sens de rotation, un interrupteur de couple formé d'un distributeur, de préférence d'un distributeur 3/2 (70 ou 71), qui, lorsqu'une surcharge fixée est atteinte, peut établir une liaison entre la conduite de distribution principale (25) et la deuxième entrée du sélecteur de circuit associé (64 ou 65) relativement au sens de rotation, pour la mise en position de fermeture du distributeur d'isolement associé (27 ou 31).

2. Actionneur selon la revendication 1, caractérisé par le fait que l'orifice central de chacun des deux sélecteurs de circuit (64 et 65) est relié par une conduite de pilotage (66 ou 67) à un autre sélecteur de circuit (56 ou 57) de façon telle que de l'air de pilotage puisse passer par l'orifice central de ce sélecteur de circuit aval (56 ou 57) pour manoeuvrer le distributeur d'isolement associé (27 ou 31).

3. Actionneur selon la revendication 2, caractérisé par un bouton-poussoir d'arrêt (50) pour la manoeuvre d'un distributeur 3/2 (52) qui est monté entre la conduite de distribution principale (25) et des conduites de pilotage ou dérivations (53, 54, 55) allant aux deux sélecteurs de circuit (56, 57).

4. Actionneur selon l'une des revendications 1 à 3, caractérisé par le fait qu'aux distributeurs d'isolement (27, 31), sont adjoints des éléments de pilotage formés de distributeurs, de préférence de distributeurs 3/2 (36, 46), pour le réglage de l'air de pilotage qui manoeuvre les distributeurs d'isolement (27 et 31), et que ces distributeurs 3/2 (36, 46) peuvent être mis, d'une part, au moyen de poussoirs ou boutons-poussoirs (32 et 42) pour la rotation dextrorsum et la rotation sinistrorsum du moteur rotatif pneumatique (2), dans une position de passage d'air de pilotage pour l'amenée d'air de pilotage ouvrant les distributeurs d'isolement (27 et 31) et, d'autre part, au moyen de l'air de pilotage venant des sélecteurs de circuit (64 ou 65 ou 56 ou 57), dans une position de fermeture qui correspond à la position de fermeture des distributeurs d'isolement associés (27 et 31).

FIG. 1

0 077 984

FIG. 2